# FASCICULE DE BREVET EUROPEEN

(11) **EP 3 802 084 B1**
(45) Date de publication et mention de la délivrance du brevet: **13.07.2022**
(21) Numéro de dépôt: 19740615.0
(22) Date de dépôt: 22.05.2019
(51) Int. Cl.: B29D 30/06

(54) **ENSEMBLE D'ELEMENTS MOULANTS**
ZUSAMMENBAU VON FORMTEILEN
ASSEMBLY OF MOLDING ELEMENTS

(30) Priorité: 25.05.2018 FR 1854429
(43) Date de publication de la demande: 14.04.2021
(73) Titulaire: COMPAGNIE GENERALE DES ETABLISSEMENTS MICHELIN, 63000 Clermont-Ferrand (FR)
(72) Inventeur: MASSIS, Frédéric, 63040 Clermond Ferrand Cedex 9 (FR)
(74) Mandataire: Roussy, Delphine
(86) Numéro de dépôt international: PCT/FR2019/051163
(87) Numéro de publication internationale: WO 2019/224479

(56) Documents cités:
- CN-A- 104 389 869
- FR-A1- 3 014 734
- JP-A- H1 158 386

## Description

### Domaine technique

La présente invention concerne un ensemble d'élément moulant pour le moulage d'une découpure dans une bande de roulement d'un pneumatique. Ledit ensemble d'éléments moulants est destiné à former un réseau d'éléments moulants dans un moule.

### Etat de la technique

On connaît du document FR2939712 un ensemble d'éléments moulants formant un réseau. Les éléments moulants, ici des cordons ou des lamelles, sont fabriqués d'un seul tenant par frittage laser. Ces éléments moulants permettent de mouler des découpures dans une bande de roulement d'un pneumatique.

Le réseau formé par les éléments moulants peut avoir une taille importante. Dans certaines conditions de fabrication, ce réseau peut être soumis à des déformations non négligeables, ce qui le fait sortir des tolérances de fabrication acceptables. De plus, pour fabriquer un tel réseau, il est nécessaire de prévoir une machine de frittage laser adéquate et plus particulièrement un plateau de réception du réseau de grande dimension. Ce qui augmente les coûts de fabrication. En outre, lorsqu'un élément moulant du réseau est non conforme, c'est tout le réseau qui doit être mis au rebus.

On connaît également du document FR3014734 un élément moulant comportant un moyen d'assemblage pour cet élément moulant avec un autre élément moulant pour former un ensemble d'éléments moulants. Ce moyen d'assemblage consiste en une fente réalisée dans une ou plusieurs protubérances d'une des lamelles dans laquelle est insérée l'autre lamelle. L'inconvénient de cette solution est que la protubérance crée un creux dans la bande de roulement ce qui n'est pas toujours souhaitable. D'autre part, le nombre d'inclinaisons possibles est limité.

Il existe donc un besoin de trouver une solution permettant d'obtenir un ensemble d'éléments moulants de bonne tenue mécanique, respectant les tolérances de fabrication, simple et pratique à fabriquer, qui ne crée pas de creux inutile dans la bande de roulement et qui permette de nombreuses configurations.

### Définitions

Par « pneumatique », on entend tous les types de bandages élastiques soumis à une pression interne ou non.

Par « bande de roulement » d'un pneumatique, on entend une quantité de matériau en caoutchouc délimitée par des surfaces latérales et par deux surfaces principales dont l'une est destinée à entrer en contact avec une chaussée lorsque le pneumatique roule et l'autre est orienté vers l'intérieur du pneu.

Par « découpure dans une bande de roulement » on entend soit une découpure fine également appelée incision, soit une découpure large également appelée rainure.

Par « élément moulant », on entend un élément disposé dans un moule apte à réaliser des découpures dans la bande de roulement d'un pneumatique. Un élément moulant apte à réaliser une incision dans la bande de roulement est appelé une lamelle. Un élément moulant apte à réaliser une rainure dans la bande de roulement est appelé un cordon.

### Description de l'invention

L'objet de l'invention est un ensemble d'éléments moulants pour le moulage de découpures dans une bande de roulement d'un pneumatique, ledit ensemble comprenant une première lamelle, une deuxième lamelle et des moyens d'assemblage de la première lamelle avec la deuxième lamelle, il est caractérisé en ce que les moyens d'assemblage comprennent au moins une fente dans l'épaisseur de la première lamelle, ladite première lamelle ne comportant pas de surépaisseur au niveau de ladite fente et une protubérance dans le prolongement de la deuxième lamelle, ladite protubérance étant apte à être insérée dans la fente. Ce système d'assemblage est à la fois simple à réaliser et permet une multitude de configurations des lamelles les unes par rapport aux autres. En particulier, il n'oblige pas à avoir une deuxième lamelle continue de part et d'autre de la première lamelle.

Avantageusement, la deuxième lamelle fait un angle β non nul par rapport à un axe Y, ledit axe Y appartenant à un repère orthonormé d'axes X, Y et Z, ledit axe Y étant perpendiculaire à une des faces latérales principales de la première lamelle. Chaque lamelle présente une surface sensiblement rectangulaire, bordée de deux faces latérales dites principales car plus grande et deux faces latérales dites secondaires en bout de la lamelle.

Avantageusement, l'angle β est compris entre +60° et -60°.

Avantageusement, la deuxième lamelle a une épaisseur e et la fente a une largeur l telle que l ≥ e + ε, avec ε compris entre 0,05 et 2mm. Ceci permet de garder un jeu afin de faciliter l'insertion de la deuxième lamelle, mais aussi d'appliquer, si besoin, une inclinaison β à la deuxième lamelle.

Avantageusement, la fente est inclinée d'un angle α par rapport à l'axe X, ledit axe X étant perpendiculaire à une des faces latérales secondaires principales de la première lamelle. Cette face latérale secondaire principale correspond à une tranche ou face supérieure de la lamelle et qui s'étend dans la longueur de cette lamelle.

Avantageusement, l'angle α est compris entre +30° et -30°.

Avantageusement, l'axe principal de la fente est incliné par rapport à l'axe Y. Les deux côtés de la fente sont parallèles et inclinées d'un angle β. On a ainsi un bon maintien de la lamelle avec un angle définit.

Avantageusement, la fente s'élargit dans la direction de l'axe Y. La fente a une ouverture qui va en se rétrécissant de l'entrée vers le fond, la deuxième lamelle entre facilement et on peut ensuite l'orienter comme on veut sur l'une ou l'autre des faces de la fente.

Avantageusement, la première lamelle présente plusieurs fentes alignées. Ces fentes pourront être perpendiculaire ou inclinées d'un angle α par rapport à l'axe X. cela permet de maintenir des lamelles de plus grande hauteur.

Avantageusement, la fente a une hauteur h comprise entre 2 et 10mm. Cette dimension est suffisante pour garantir un bon maintien éviter la rotation de la deuxième lamelle.

Avantageusement, la fente est distante d'un des bords de la première lamelle d'une distante d ou d1 comprise entre 0,5 et 4mm. Cette distance garantit une bonne résistance de la première lamelle

D'autres avantages pourront encore apparaître à l'homme du métier à la lecture des exemples ci-dessous, illustrés par les figures annexées, donnés à titre d'exemple :

### Brève description des figures

- La figure 1 est une première lamelle selon l'invention,
- La figure 2 est une deuxième lamelle selon l'invention,
- La figure 3 montre une perspective d'un ensemble de deux lamelles selon l'invention,
- la figure 4 est une première variante d'ensemble selon l'invention,
- la figure 5 est une deuxième variante d'ensemble selon l'invention,
- les figures 6a, 6b, 6c illustrent les différentes positions possibles de la deuxième lamelle par rapport à la première,
- la figure 7 montre le détail du montage de la deuxième lamelle sur la première,
- la figure 8 est une coupe d'un premier mode de réalisation du montage de deux lamelles,
- la figure 9 est une coupe d'un deuxième mode de réalisation du montage de deux lamelles
- la figure 10 est une coupe d'un troisième mode de réalisation du montage de deux lamelles.

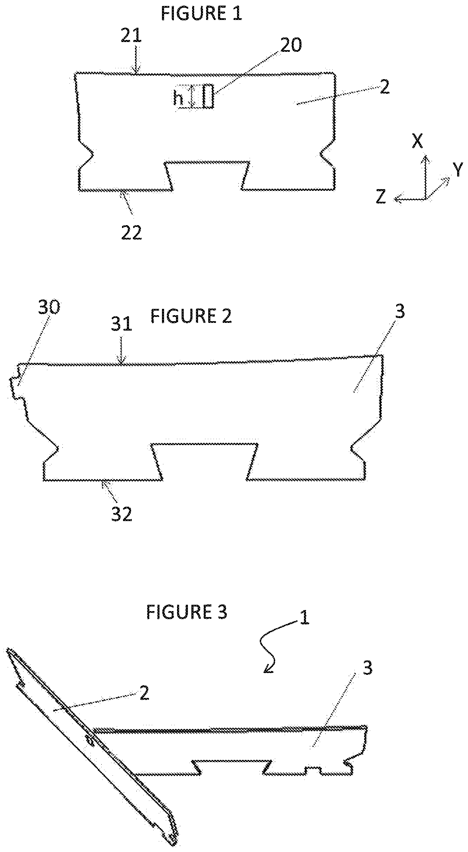

Dans la suite de la description les références seront faites par rapport au repère orthonormé X, Y, Z représenté à la figure 1, la direction verticale correspondant à l'axe X, la direction longitudinale à l'axe Z et la direction transversale à l'axe Y. De même, les éléments sensiblement identiques ou similaires seront désignés par des références identiques dans les différentes variantes.

L'ensemble 1 d'éléments moulants pour le moulage de découpures dans une bande de roulement d'un pneumatique selon l'invention comprend une première lamelle 2 et une deuxième lamelle 3.

La première lamelle 2, illustrée à la figure 1, présente une fente 20 de hauteur h, cette hauteur sera de préférence supérieure à 2mm pour éviter la rotation de la deuxième lamelle 3, en particulier 2,5mm. Cette fente 20 est fermée en haut et en bas. La première lamelle 2 présente un bord supérieur 21 et un bord inférieur 22.

La deuxième lamelle 3, illustrée figure 3, présente une protubérance 30 dans le prolongement de la lamelle 3. Cette protubérance 30 a une longueur sensiblement égale à la hauteur h de la fente 20. La deuxième lamelle 3 présente un bord supérieur 31 et un bord inférieur 32.

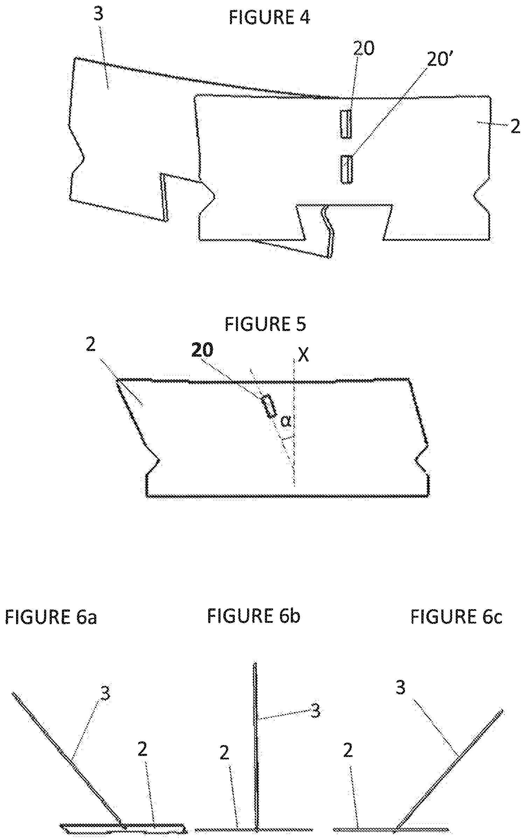

La figure 3 montre les deux lamelles montées l'une avec l'autre. La deuxième lamelle 3 a sa protubérance 30 insérée dans la fente 20 de la première lamelle 2. Dans cet exemple, la deuxième lamelle 3 est inclinée par rapport à la première lamelle 2. Mais comme on peut le voir aux figures 6a, 6b et 6c, la deuxième lamelle 3 peut être perpendiculaire à la première lamelle 2 (figure 6b), inclinée d'angle β vers la gauche (figure 6a) ou vers la droite (figure 6c). Cette inclinaison peut varier de -60° à +60° par rapport à la position perpendiculaire à la première lamelle 2, soit l'axe Y.

La deuxième lamelle 3 peut également être inclinée verticalement, c'est-à-dire par rapport à l'axe X (cf. figure 5). Cette inclinaison d'un angle α par rapport à l'axe X est comprise entre -30° et +30°. Il est à noter que la deuxième lamelle 3 peut cumuler les deux inclinaisons d'angles α et β.

Si la hauteur des lamelles 2 et 3 est importante, par exemple supérieure à 12mm, on pourra prévoir deux fentes 20 et 20' alignées pour assurer un meilleur maintien, dans ce cas la distance entre les deux fentes 20 te 20' sera de préférence de 1 mm. La deuxième lamelle 3 aura alors deux protubérances 30 alignées dans la tranche de ladite lamelle et de même espacement.

Il est également possible de prévoir plusieurs fentes 20, parallèles ou non, dans la première lamelle 2 pour y insérer plusieurs lamelles du même type que la deuxième lamelle 3 ou pour laisser la possibilité à l'utilisateur de choisir son inclinaison d'angle α.

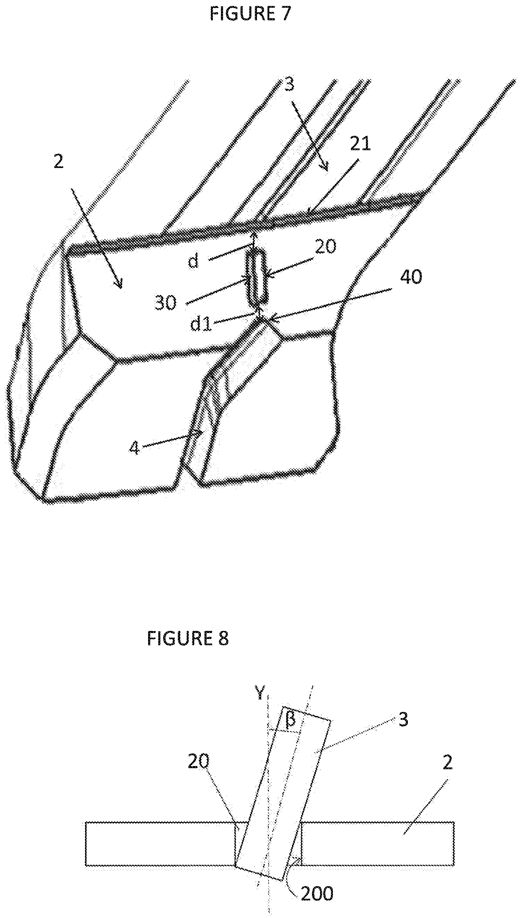

La figure 7 montre un ensemble 1 d'éléments moulants monté dans un moule 4. Ce moule 4 comprend plusieurs lamelles dont une partie basse y est insérée et une partie supérieure dépasse. La limite entre le moule et la partie basse de la lamelle définit un profil moulant 40. Il est important que la partie haute des lamelles soit fixée entre elles, c'est pourquoi la fente 20 de la première lamelle 2 doit être distante du bord supérieur 21 d'une distance minimum d et d'une distance minimum d₁ du profil moulant 40. Les distances d et d₁ seront de préférence supérieure à 1mm. Cette distance minimum entre la fente 20 et le profil moulant 40, et entre la fente 20 et le sommet 21 de la lamelle 2 garantit une bonne résistance de la lamelle. La hauteur de la fente 20 doit être de préférence d'au moins 2mm pour garantir le bon maintien et éviter la rotation de la lamelle secondaire.

La fente 20 a deux cotés parallèles 200 d'axe Y comme visible à la figure 8. La fente 20 est ainsi facile à réaliser par emboutissage. Il est possible d'y insérer la deuxième lamelle 3 perpendiculairement à la première lamelle 2 ou de façon légèrement inclinée si on laisse un certain jeu entre la deuxième lamelle 3 et les bords de la fente 20. La largeur de la fente 20 dépend de l'épaisseur de la deuxième lamelle 3 et de l'angle β qu'on désire obtenir. Ainsi avec une lamelle 3 d'épaisseur 0,4mm s'il n'y a pas de jeu entre la fente 20 et la lamelle 3, celle-ci sera insérée perpendiculairement, avec un jeu de 0,05 à 2mm, elle pourra être inclinée jusqu'à 15°, voire jusqu'à 30°.

La protubérance 30 a une largeur de 0,4mm minimum à 0,5 ou 0,6mm s'il y a un angle pour garantir une bonne tenue. Dans ce dernier cas, le dépassement de la protubérance derrière la fente 20 ne sera que de quelques dixièmes de millimètre.

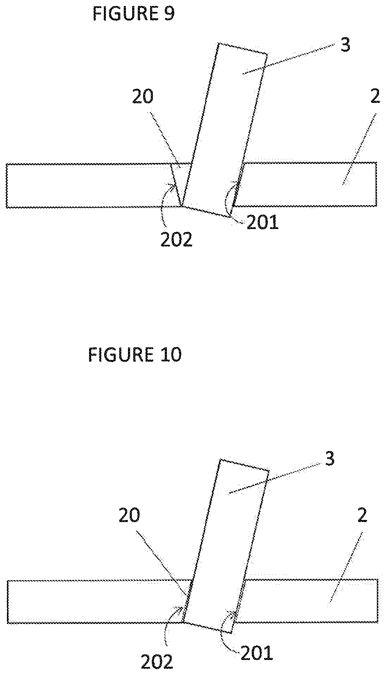

La figure 9 montre une variante où les bords 201 et 202 de la fente 20 sont évasés, l'inclinaison des bords 201 et 202 permet de donner la même inclinaison à la deuxième lamelle 3.

A la figure 10, les deux bords 201 et 202 sont parallèles et inclinés, on a ainsi à la fois une bonne tenue de la deuxième lamelle et une inclinaison précise.

## Revendications

1. Ensemble (1) d'éléments moulants pour le moulage de découpures dans une bande de roulement d'un pneumatique, ledit ensemble comprenant une première lamelle (2), une deuxième lamelle (3) et des moyens d'assemblage de la première lamelle (2) avec la deuxième lamelle (3), **caractérisé en ce que** les moyens d'assemblage comprennent au moins une fente (20) dans l'épaisseur de la première lamelle (2), ladite première lamelle (2) ne comportant pas de surépaisseur au niveau de ladite fente (20) et une protubérance (30) dans le prolongement de la deuxième lamelle (3), ladite protubérance (30) étant apte à être insérée dans la fente (20).

2. Ensemble (1) d'éléments moulants selon la revendication 1, **caractérisé en ce que** la deuxième lamelle (3) fait un angle β non nul par rapport à un axe Y, ledit axe Y appartenant à un repère orthonormé d'axes X, Y et Z, ledit axe Y étant perpendiculaire à une des faces latérales principales de la première lamelle.

3. Ensemble (1) d'éléments moulants selon la revendication précédente, **caractérisé en ce que** l'angle β est compris entre +60° et -60°.

4. Ensemble (1) d'éléments moulants selon une des revendications précédentes, **caractérisé en ce que** la deuxième lamelle (3) a une épaisseur e et que la fente (20) a une largeur l telle que l ≥ e + ε, avec ε compris entre 0,05 et 2mm.

5. Ensemble (1) d'éléments moulants selon l'une des revendications 2 à 4, **caractérisé en ce que** la fente (20) est inclinée d'un angle α par rapport à l'axe X, ledit axe X étant perpendiculaire à une des faces latérales secondaire principales de la première lamelle (2).

6. Ensemble (1) d'éléments moulants selon la revendication précédente, **caractérisé en ce que** l'angle α est compris entre +30° et -30°.

7. Ensemble (1) d'éléments moulants selon une des revendications 2 à 6, **caractérisé en ce que** l'axe principal de la fente (20) est incliné par rapport à l'axe Y.

8. Ensemble (1) d'éléments moulants selon l'une des revendications 2 à 7, **caractérisé en ce que** la fente (20) s'élargit dans la direction de l'axe Y.

9. Ensemble (1) d'éléments moulants selon une des revendications précédentes, **caractérisé en ce que** la première lamelle (2) présente plusieurs fentes (20, 20') alignées.

10. Ensemble (1) d'éléments moulants selon une des revendications précédentes, **caractérisé en ce que** la fente (20) a une hauteur h comprise entre 2 et 10mm.

11. Ensemble (1) d'éléments moulants selon une des revendications précédentes, **caractérisé en ce que** la fente (20) est distante d'un des bords (21, 40) de la première lamelle d'une distante d, d₁ comprise entre 0,5 et 4mm.

## Patentansprüche

1. Baugruppe (1) von Formelementen zum Formen von Ausschnitten in einem Laufstreifen eines Reifens, wobei die Baugruppe eine erste Lamelle (2), eine zweite Lamelle (3) und Mittel zum Verbinden der ersten Lamelle (2) mit der zweiten Lamelle (3) umfasst, **dadurch gekennzeichnet, dass** die Verbindungsmittel zumindest einen Schlitz (20) in der Dicke der ersten Lamelle (2) umfassen, wobei die erste Lamelle (2) im Bereich des Schlitzes (20) keine Überdicke aufweist, und in der Verlängerung der zweiten Lamelle (3) einen Vorsprung (30) umfassen, wobei der Vorsprung (30) geeignet ist, in den Schlitz (20) eingeführt zu werden.

2. Baugruppe (1) von Formelementen nach Anspruch 1, **dadurch gekennzeichnet, dass** die zweite Lamelle (3) einen Winkel β in Bezug auf eine Y-Achse bildet, wobei die Y-Achse zu einem Koordinatensystem mit den Achsen X, Y und Z gehört, wobei die Y-Achse senkrecht zu einer der Hauptseitenflächen der ersten Lamelle ist.

3. Baugruppe (1) von Formelementen nach dem vorangehenden Anspruch, **dadurch gekennzeichnet, dass** der Winkel β zwischen + 60 ° und - 60 ° beträgt.

4. Baugruppe (1) von Formelementen nach einem der vorangehenden Ansprüche, **dadurch gekennzeichnet, dass** die zweite Lamelle (3) eine Dicke e aufweist und dass der Schlitz (20) eine Breite l aufweist, so dass l ≥ e + ε, wobei ε zwischen 0,05 und 2 mm beträgt.

5. Baugruppe (1) von Formelementen nach einem der Ansprüche 2 bis 4, **dadurch gekennzeichnet, dass** der Schlitz (20) um einen Winkel α in Bezug auf die X-Achse geneigt ist, wobei die X-Achse senkrecht zu einer der sekundären Hauptseitenflächen der ersten Lamelle (2) ist.

6. Baugruppe (1) von Formelementen nach dem vorangehenden Anspruch, **dadurch gekennzeichnet, dass** der Winkel α zwischen + 30 ° und - 30 ° beträgt.

7. Baugruppe (1) von Formelementen nach einem der Ansprüche 2 bis 6, **dadurch gekennzeichnet, dass** die Hauptachse des Schlitzes (20) in Bezug auf die Y-Achse geneigt ist.

8. Baugruppe (1) von Formelementen nach einem der Ansprüche 2 bis 7, **dadurch gekennzeichnet, dass** sich der Schlitz (20) in Richtung der Y-Achse verbreitert.

9. Baugruppe (1) von Formelementen nach einem der vorangehenden Ansprüche, **dadurch gekennzeichnet, dass** die erste Lamelle (2) mehrere ausgerichtete Schlitze (20, 20') aufweist.

10. Baugruppe (1) von Formelementen nach einem der vorangehenden Ansprüche, **dadurch gekennzeichnet, dass** der Schlitz (20) eine Höhe h zwischen 2 und 10 mm aufweist.

11. Baugruppe (1) von Formelementen nach einem der vorangehenden Ansprüche, **dadurch gekennzeichnet, dass** der Schlitz (20) von einem der Ränder (21, 40) der ersten Lamelle um einen Abstand d, d₁ zwischen 0,5 und 4 mm beabstandet ist.

## Claims

1. Assembly (1) of moulding elements for moulding cuts in a tread of a tyre, said assembly comprising a first sipe blade (2), a second sipe blade (3) and means for assembling the first sipe blade (2) with the second sipe blade (3), **characterized in that** the assembly means comprise at least one slot (20) in the thickness of the first sipe blade (2), said first sipe blade (2) having no additional thickness at said slot (20) and a protuberance (30) in the continuation of the second sipe blade (3), said protuberance (30) being able to be inserted into the slot (20).

2. Assembly (1) of moulding elements according to Claim 1, **characterized in that** the second sipe blade (3) makes a non-zero angle β with an axis Y, said axis Y belonging to an orthonormal frame of reference of axes X, Y and Z, said axis Y being perpendicular to one of the main lateral faces of the first sipe blade.

3. Assembly (1) of moulding elements according to the preceding claim, **characterized in that** the angle β is between +60° and -60°.

4. Assembly (1) of moulding elements according to one of the preceding claims, **characterized in that** the second sipe blade (3) has a thickness e and **in that** the slot (20) has a width l such that l ≥ e + ε, with ε between 0.05 and 2 mm.

5. Assembly (1) of moulding elements according to one of Claims 2 to 4, **characterized in that** the slot (20) is inclined by an angle α relative to the axis X, said axis X being perpendicular to one of the main secondary lateral faces of the first sipe blade (2).

6. Assembly (1) of moulding elements according to the preceding claim, **characterized in that** the angle α is between +30° and -30°.

7. Assembly (1) of moulding elements according to one of Claims 2 to 6, **characterized in that** the main axis of the slot (20) is inclined relative to the axis Y.

8. Assembly (1) of moulding elements according to one of Claims 2 to 7, **characterized in that** the slot (20) widens in the direction of the axis Y.

9. Assembly (1) of moulding elements according to one of the preceding claims, **characterized in that** the first sipe blade (2) has a plurality of aligned slots (20, 20').

10. Assembly (1) of moulding elements according to one of the preceding claims, **characterized in that** the slot (20) has a height h of between 2 and 10 mm.

11. Assembly (1) of moulding elements according to one of the preceding claims, **characterized in that** the slot (20) is remote from one of the edges (21, 40) of the first sipe blade by a distance d, d₁ of between 0.5 and 4 mm.
